# EUROPEAN PATENT APPLICATION

(11) **EP 1 125 833 A2**
(43) Date of publication of application: **22.08.2001**
(21) Application number: 01850033.0
(22) Date of filing: 16.02.2001
(51) Int. Cl.: B62H 1/00, B62H 3/00

(54) **Support pad**

(30) Priority: 17.02.2000 SE 0000508
(71) Applicant: Edil, Viyan, 143 43 Varby (SE)
(72) Inventor: Edil, Viyan, 143 43 Varby (SE)
(74) Representative: Eriksson, Kjell

(57) **Abstract**

The present invention relates to a support pad (1) intended to be used in connection with kickstands (S) on two-wheeled vehicles, preferably motorcycles (M), said support pad (1) comprising a disc shaped base body (5) having, in its active position of use, an upper side (2) and a lower side (4).

It is significant for the invention that a magnet (7) is provided in the base body (5).

## Description

### Technical Field of the Invention

The present invention relates to a support pad intended to be used in connection with kickstands on two-wheeled vehicles, preferably motorcycles, said support pad comprising a disc shaped base body having, in its active position of use, an upper side and a lower side.

### Prior Art

From US-A-5,257,803 a disc shaped support platform for kickstands is previously known, said support platform having a recess that is intended to receive the free end of the kickstand.

From US-A-4,521,031 a disc shaped support pad for kickstands is previously known, said support pad being equipped with reinforcement means that are located inside the support pad. This enables the support pad to distribute the load from the two-wheeled vehicle over the entire surface of the pad.

From US-A-4,474,387 a kickstand supporting device is previously known, said supporting device having a wall on its upper side, said wall defining a space that is intended to receive the free end of the kickstand. On its lower side the supporting device is equipped with a number of pointed protrusions that are intended to cooperate with the ground in order to impart a good stability to the supporting device relative to the ground.

### Objects and Features of the Invention

A primary object of the present invention is to present a support pad of the type defined above, said support pad being extremely simple to position relative to the free end of the kickstand.

A further object of the present invention is to provide a proper friction between the free end of the kickstand and the support pad.

Still an object of the present invention is to provide a good cooperation between the support pad and the ground that the support pad rests upon.

Still a further object of the present invention is that the support pad should be simple to store when not in use.

At least the primary object of the present invention is realised by means of a support pad that has been given the features of the appending independent claim. Preferred embodiments of the invention are defined in the dependent claims.

### Brief Description of the Drawings

Below an embodiment of the present invention will be described, reference being made to the accompanying drawings, where:
- Fig 1: shows a side view of a motorcycle with a kickstand being folded down, said kickstand cooperating with a support pad according to the present invention;
- Fig 2: shows a perspective view of a detail of a portion of the kickstand and a support pad according to the present invention;
- Fig 3: shows a support pad according to the present invention, said support pad being partly sectioned;
- Fig 4: shows a top view of the upper side of the support pad; and
- Fig 5: shows a top view of the lower side of the support pad.

### Detailed Description of a Preferred Embodiment of the Invention

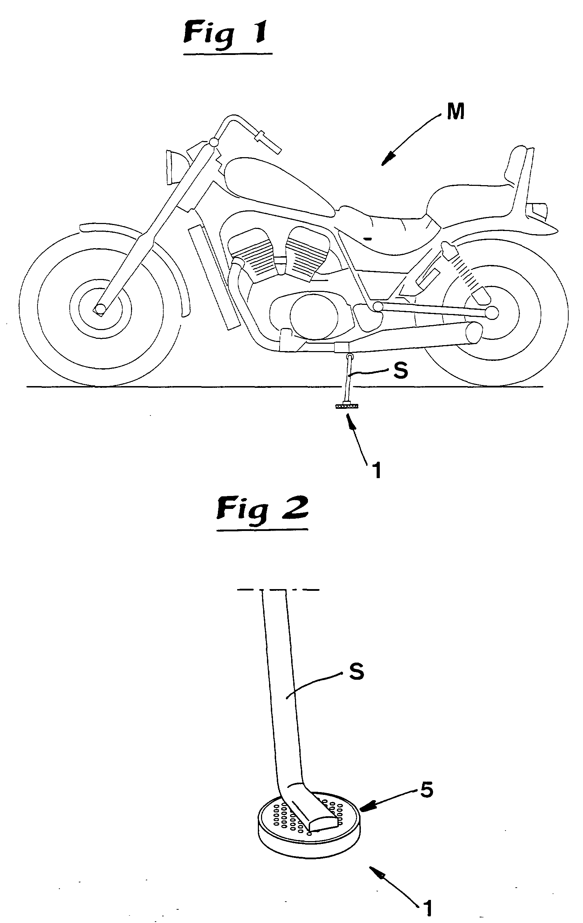

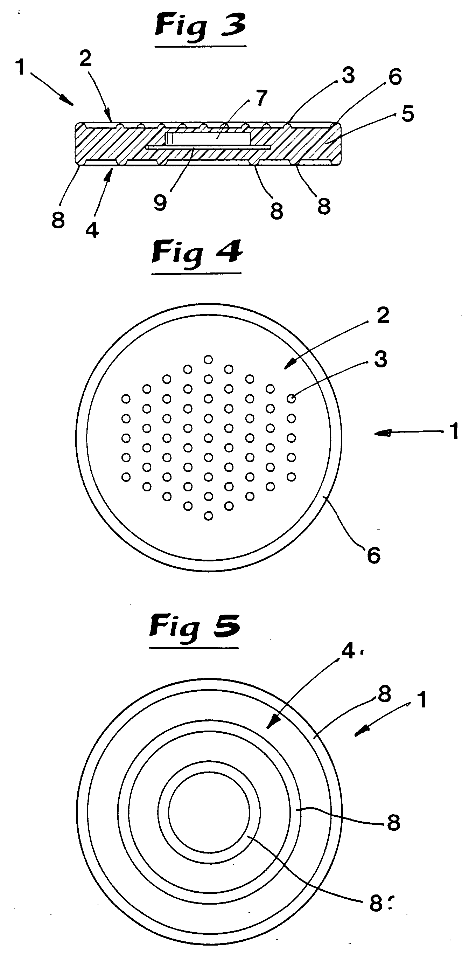

The motorcycle M, shown in Fig 1, is equipped with a kickstand S that is in a folded down, active position in Fig 1. The free end of the kickstand S bears on a support pad 1 according to the present invention, said support pad 1 in its turn resting on a ground that normally constitutes the ground surface. The support pad 1 consists of a disc shaped base body 5 that preferably is manufactured from a plastic material. As is evident from Fig 2 the support pad 1, in the shown embodiment, has the shape of a circular disc. From Fig 2-4 it is also evident that in active position of the support pad 1, said support pad 1, on its upper side 2, being equipped with nobbies 3 that increase the friction against the kickstand S when said kickstand S bears on the support pad 1, see Fig 2. In active position of the support pad 1, said support pad 1, on its upper side 2, also being equipped with a first, annular protrusion 6 that in the shown embodiment has a somewhat larger height than the nobbies 3 located on the inside. In active position of the support pad 1, said support pad 1, on its lower side 4, being equipped with second, concentric, annular protrusions 8, see Fig 3 and 5, whose aim is to improve the grip of the support pad 1 relative to the ground, i.e. normally the ground surface. The risk that the support pad 1 slides relative to the ground is thereby reduced. In the shown embodiment three second concentric, annular protrusions 8 are provided on the lower side 4 of the support pad 1.

Fig 3 shows a section through the base body 5 while a magnet 7 and a reinforcement plate 9, also included in the support pad 1, are not sectioned. Preferably, the reinforcement plate 9 is manufactured from steel. According to the shown embodiment the reinforcement plate 9 has a smaller thickness but a larger diameter than the magnet 7.

According to a preferred way of manufacturing the support pad 1 according to the present invention the plastic material is injection moulded, the magnet 7 and the reinforcement plate 9 being embedded in the base body 5 in connection with the injection moulding process. In active position of the support pad 1 the magnet 7 is located closer to the upper side 2 as is evident from Fig 3. As will be explained below this is of importance for the function of the support pad 1. The reinforcement plate 9 is located directly adjacent the magnet 7, on the side of the magnet 7 that faces towards the lower side 4 of the support pad 1 when said support pad 1 being in active position.

As is evident from Fig 1 and 2 the support pad 1 according to the present invention is used when parking the motorcycle M. When the support pad 1 is not in use the driver of the motorcycle M stores it in a suitable place, preferably in a pocket of the motorcycle overall or in a storage space of the motorcycle M. In connection with parking of the motorcycle M the driver brings out the support pad 1. After the kickstand S has been folded down the support pad 1 is attached to the free end of the folded down kickstand S, the embedded magnet 7 in the support pad 1 brings about that the support pad 1 adheres to the free end of the kickstand S. Then the kickstand S, including the attached support pad 1, may be lowered to bear on the ground, i.e. normally the ground surface, the lower side 4 of the support pad 1 will contact the ground. Of course it must be seen to that the ground, i.e. normally the ground surface, is suitable to receive the support pad 1. In active position of the support pad 1 the second, concentric protrusions 8, on the lower side 4 of the support pad 1, brings about that the risk is reduced for the support pad 1 to slide relative to the ground. The primary function of the support pad 1 is to prevent the kickstand S to sink into the ground, i.e. normally the ground surface, this being a frequent problem for motorcycle drivers when the motorcycle M is to be parked, e.g. on a lawn or on sand. In order to make the support pad 1 to function in a satisfying way it should have a sufficient diameter to be able to support the weight from the motorcycle M without sinking down in the ground, even if this is very soft, e.g. sand. In exemplifying and non-restricting purpose it is stated that the diameter of the support pad 1 may be in the magnitude of 8-10 cm.

The nobbies 3, arranged on the upper side 2 when the support pad 1 is in active position, promote that no sliding occurs between the free end of the kickstand S and the support pad 1, i.e. that the free end of the kickstand S does not slide relative to the upper side 2 of the support pad 1. If sliding nevertheless should occur the first concentric, annular protrusion 6 will constitute a stop rim for the free end of the kickstand S, especially since said first concentric, annular protrusion 6 has a somewhat larger height than the nobbies 3.

### Feasible Modifications of the Invention

According to the embodiment described above the support pad has a circular shape. However, within the scope of the invention it is feasible that the support pad according to the present invention may have a number of different basic shapes. In exemplifying and non-restricting purpose square, rectangular, oval, prismatic may be mentioned.

In the embodiment described above the magnet 7 is embedded in the base body 5. However, within the scope of the invention it is also feasible that the magnet 7 projects through the upper side, in active position of the base body 5, and hence the magnet 7 will be in direct contact with the free end of the kickstand S when the support pad 1 is attached to said kickstand S.

According to the embodiment described above the magnet 7 is in the shape of a circular disc. However, within the scope of the invention the magnet may have a number of different basic shapes, e.g. square, rectangular, oval, prismatic. It is however preferred that the magnet generally is disc shaped.

Above the use of the support pad 1 in connection with a motorcycle M is described. As stated below in the claims it is generally usable in connection with two-wheeled vehicles and in an exemplifying and non-restricting purpose may be mentioned, besides motorcycles, Vespa scooters, other scooters and mopeds.

The support pad according to the present invention is preferably injection moulded from a plastic material. However, within the scope of the present invention also alternative manufacturing methods are feasible and it is further not necessary to perform the support pad in a plastic material.

## Claims

1. Support pad (1) intended to be used in connection with kickstands (S) on two-wheeled vehicles, preferably motorcycles (M), said support pad (1) comprising a disc shaped base body (5) having, in its active position of use, an upper side (2) and a lower side (4), **characterized** in that a magnet (7) is provided in the base body (5).

2. Support pad (1) according to claim 1, **characterized** in that the magnet (7) is located more close to the upper side (2) of the base body (5), when said base body (5) is in active position.

3. Support pad (1) according to claim 1 or 2, **characterized** in that in active position of the base body (5), said base body (5) being equipped with a number of nobbies (3) on the upper side of the base body (5).

4. Support pad (1) according to any of the previous claims, **characterized** in that in active position of the base body (5), said base body (5), on its upper side (2), being equipped with a first protrusion (6) along the periphery of the support pad (1).

5. Support pad (1) according to claim 3 and 4, **characterized** in that the protrusion (6) has a larger height than the nobbies (3).

6. Support pad (1) according to any of the previous claims, **characterized** in that in active position of base body (5), said base body (5) being equipped with a number of concentric protrusions (8) on its lower side (4).

7. Support pad (1) according to any of the previous claims, **characterized** in that a reinforcement plate (9) is provided in the base body (5), adjacent to the magnet (7).

8. Support pad (1) according to any of the previous claims, **characterized** in that the base body (5) is injection moulded from a plastic material, and that the magnet (7) is embedded in said base body (5).
